# EUROPEAN PATENT APPLICATION

(11) **EP 2 249 402 A1**
(43) Date of publication of application: **10.11.2010**
(21) Application number: 09716016.2
(22) Date of filing: 19.02.2009
(51) Int. Cl.: H01L 31/18, G01N 21/95, G01R 31/26

(54) **SOLAR BATTERY INSPECTION DEVICE**

(30) Priority: 25.02.2008 JP 2008042386; 26.02.2008 JP 2008001045 U
(71) Applicant: Nisshinbo Industries, Inc., Ningyo-cho Chuo-ku Tokyo 103-8650 (JP)
(72) Inventor: SHIMOTOMAI Mitsuhiro, Okazaki-shi Aichi 444-8560 (JP); SHIBUYA, Toshio, Okazaki-shi Aichi 444-8560 (JP); ICHIMURA, Hikaru, Okazaki-shi Aichi 444-8560 (JP)
(74) Representative: Skuhra, Udo
(86) International application number: PCT/JP2009/053479
(87) International publication number: WO 2009/107691

(57) **Abstract**

The present invention provides an inspection apparatus for photovoltaic devices which electrifies the photovoltaic devices in a forward direction thereof to make the photovoltaic devices emit electro-luminescence light and which has a simple-structured and cheap darkroom. The inspecting apparatus of the present invention includes a darkroom (110) provided with a flat upper surface (111), a transparent plate (112) which is provided in the upper surface of the darkroom for disposing the photovoltaic devices as an inspecting object (200), a reflector (140) which is disposed in the darkroom (110) at an oblique angle to the transparent plate, and a shading member for covering a camera (120) which is provided in the darkroom (110), the photovoltaic devices as the inspecting object on the darkroom and a guide member for transporting the photovoltaic devices.

## Description

### BACKGROUND OF THE INVENTION

### Field of the Invention

The embodiment(s) of the present invention relates to an inspection apparatus which is employed to inspect general performance of photovoltaic devices, such as a photovoltaic cell, a photovoltaic string which is formed by connecting the photovoltaic cells in series, a photovoltaic devices panel which is formed by disposing a plurality of photovoltaic strings in parallel, and the like.

### Description of the Related Art

It is well known that silicon photovoltaic devices are employed to harness solar energy. In the manufacture of the photovoltaic devices, it is important to evaluate whether the photovoltaic devices have predetermined power generation capacity. The evaluation is usually performed by measuring the output characteristics thereof.

The output characteristics are photovoltaic conversion characteristics evaluated by measuring the current-voltage characteristics of the photovoltaic devices under light irradiation. As a light source, it is desirable to use solar light. However, since the intensity of the solar light varies with weather, a solar simulator is employed. In the solar simulator, a xenon lamp, a metal halide lamp or the like is employed as an alternative to the solar light. If the aforementioned light source has been lit for a long time, the temperature thereof rises, leading to a variation on the light intensity thereof. Based on data collected using flash light of such a lamp, the output characteristic curves of the photovoltaic devices can be plotted by designating voltage as the horizontal axis and current as the vertical axis(for an instance, refer to Patent Document 1).

Another method different from the above-described method using a solar simulator is disclosed in Patent Document 2. In this method, a voltage is applied to a polycrystalline silicon photovoltaic cell in a forward direction so as to emit electroluminescence light (hereinafter referred to simply as "EL light"). By inspecting the EL light emitted from the photovoltaic cell, the current density distribution of the photovoltaic cell can be obtained, and the defects of the photovoltaic devices elements can be determined based on the unevenness of the current density distribution. That is, the part which emits no EL light in the photovoltaic cell are determined as defective parts, and if the area of the defective parts is smaller than a predetermined amount, the photovoltaic cell is determined to have a predetermined power generation capacity.

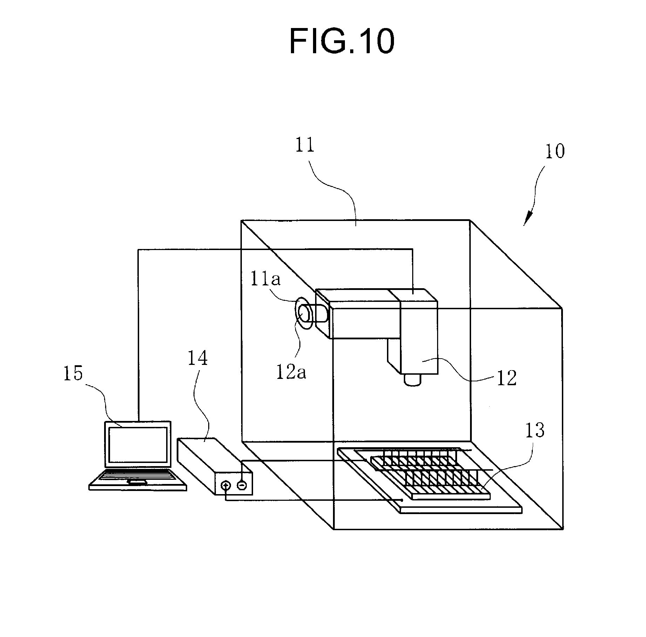

Fig. 10 schematically illustrates the structure of the inspection apparatus disclosed in the Patent Document 2. An inspection apparatus 10 includes a darkroom 11, a CCD camera 12 which is disposed at an upper portion of the darkroom 11, a power source 14 which applies current to a photovoltaic cell disposed on the floor of the darkroom 11, and an image processing apparatus 15 which processes image signals from the CCD camera 12.

The darkroom 11 is provided with a window 11a where a finder 12a of the CCD camera 12 is disposed, and thus an image photographed by the CCD camera 12 can be confirmed by viewing through the finder 12a. A computer is employed as the image processing apparatus 15.

Patent Document 1 : JP-2007-088419A

Patent Document 2 : WO/2006/059615

### SUMMARY OF THE INVENTION

In the inspection apparatus 10 illustrated in FIG. 10, the photovoltaic devices cell 13 is disposed at a lower side of the darkroom 11 and is photographed by the camera from an upper side thereof. However, EL light is not detected unless the photovoltaic cell is disposed inside the darkroom 11, since the EL light emitted from the photovoltaic cell 13 is a weak light ray of wavelength between 1,000 nm and 1,300 nm. In the case where an inspection-object is a piece of photovoltaic cell, the size thereof is about 100 mm × 100 mm, which is possible to be disposed in a small-sized darkroom.

However, in the case where the inspection-object is a photovoltaic devices panel, the size thereof is about 2 m×1 m. Therefore, the darkroom 11 needs to have a dimension capable of accommodating inspection-object. In addition, the photovoltaic devices panel as the inspection-object has to be disposed inside the darkroom so as to be photographed by the CCD camera 12. Therefore, the darkroom should be provided with a door through which the photovoltaic devices can be transported into the darkroom or carried out from the darkroom. If the inspection apparatus is configured for the photovoltaic devices to be transported into the darkroom, the shading effect has to be secured when the door is closed. It is also necessary that the inspection apparatus is provided with a positioning member and a guide member for transporting the photovoltaic devices inside the darkroom. Furthermore, it is also necessary that the inspection apparatus is provided with an electrifying means for applying a current to the photovoltaic devices in the darkroom. Thereby, the inspection apparatus becomes complicated in structure and expensive in price.

In addition, the following problems are caused when such an inspection apparatus is incorporated as a part of a production line to manufacture photovoltaic devices. It is needed to set up a long distance between the photovoltaic devices panel and the camera due to the large-scale of the photovoltaic devices panel, in case where the entire photovoltaic devices is inspected by photographing with the camera and the camera is disposed below the photovoltaic devices panel. Therefore, it is need to dig out the ground of the factory, which corresponds to the place that the inspection apparatus is disposed, if it is intended to unify a pass-line of the photovoltaic devices panel in the production line, which is defined as a distance from the ground of the factory to a position that the photovoltaic devices panel is transported. Accordingly, an extra expense to adopt the inspection apparatus becomes higher.

An objective of the present invention is to provide a cheap and simply-structured inspection apparatus of photovoltaic devices, which is configured to emit EL light by applying a current to the photovoltaic devices in a forward direction.

To achieve these objects and other advantages in accordance with the purpose of the invention, as embodied and broadly described herein, the inspection apparatus for photovoltaic devices according to the present invention includes: a darkroom having a flat upper surface; a transparent plate disposed on the upper surface of the darkroom to dispose a photovoltaic devices as an inspection-object thereon; a reflector disposed within the darkroom and being oblique with respect to the transparent plate; and a camera photographing an image reflected through the reflector.

Further, the inspection apparatus may be characterized by having a moving mechanism which is disposed in the darkroom and is configured to move the camera in a plane which intersects with the transparent plate.

In addition, the inspection apparatus may further be characterized by having a transportation guide member for the photovoltaic devices as the inspection-object, **characterized in that** the transportation guide member is configured to be disposed on an upper position of the darkroom.

Furthermore, the inspection apparatus may further be characterized by having a shading member for covering the photovoltaic devices as the inspection-object and the transportation guide member disposed on an upper position of the darkroom.

In addition, the shading member may further be characterized by having doors which are provided for respectively transporting the photovoltaic devices as the inspection-object into and carrying out of the inspection apparatus.

Furthermore, the inspection apparatus may further be characterized by having a temperature/humidity regulator configured to maintain the temperature and humidity in the darkroom substantially constant.

In addition, the inspection apparatus may further be characterized by having supporting members to support the reflector, **characterized in that** the supporting members are configured to be able to absorb the expansion and contraction of the reflector caused by the expansion of the reflector.

Furthermore, the inspection apparatus may further be characterized by having an automatic cleaning devices configured to a reflecting surface of the reflector.

In addition, the inspection apparatus may further be characterized by having a temperature controlling devices provided on a rear surface of the reflector, to maintain the temperature of the reflector constant. The temperature controlling devices may be characterized by having a heating means including a heater for controlling temperature, heating/cooling means such as Peltier elements or a conduit in which fluid for heat exchange flows.

According to the inspection apparatus of photovoltaic devices of the present invention, it is possible to photograph the photovoltaic devices by using the camera in the darkroom and disposing the photovoltaic devices as the inspection-object on the transparent plate in the upper surface of the darkroom from the outside of the darkroom. Since a current is applied to the photovoltaic devices during photographing, the photovoltaic devices emit EL light. Photographing the state of emitting EL light of the photovoltaic devices and analyzing the image photographed by the camera through the image processing apparatus which is connected to the camera enable determining whether the photovoltaic devices is defective or not.

It is possible to inspect the photovoltaic devices by disposing it on the upper surface of the darkroom from the outside of the darkroom. Therefore, it is not necessary to provide a door for the photovoltaic devices as the inspection-object to be transported into the darkroom or carried out from the darkroom. Accordingly, it is possible to simplify the structure of the darkroom, thereby, enabling miniaturization thereof.

In particular, it is possible to dispose the camera on a side surface of the darkroom, since the reflector is obliquely disposed with respect to the transparent panel. Therefore, the height of the darkroom can be lowered, even if the photovoltaic devices panel as an inspection-object becomes larger. Accordingly, the pass-line of the production line can be unified with the pre-process or the post-process of the inspection apparatus of the present invention.

Further, in the case where the inspection-object is the photovoltaic devices panel, the photovoltaic devices panel is transported in a production line (manufacturing apparatus, such as a laminating apparatus) in a state that a light receiving surface is directed downward. Therefore, it is possible to dispose the photovoltaic devices panel on the inspection apparatus without inversing it, since the inspection apparatus of the present invention is provided with a transparent plate on an upper surface of the darkroom.

Other features and advantages of the present invention will be apparent from the following description when taken in conjunction with the accompanying drawings, in which like reference characters designate similar or identical parts throughout the several views thereof.

### BRIEF DESCRIPTION OF THE DRAWINGS

Fig. 1 is a planar view illustrating a structure of an inspection apparatus according to the present invention.

Fig. 2 is a front view thereof.

Fig. 3 is a left-side view thereof.

Fig.4A, Fig.4B and Fig.4C illustrate a configuration of an inspection apparatus according to the present invention as a separate embodiment. Fig.4A is a planar view. Fig.4B is a front view. Fig.4C is a right-side view thereof.

Fig.5A and Fig.5B illustrate a configuration to purify the air in the darkroom, and to keep the temperature in the darkroom constant. Fig.5A is a planar view. Fig.5B is a front view.

Fig.6A and Fig.6B illustrate a mounting configuration of an automatic cleaning device for eliminating dust on the reflector. Fig.6A is a front view. Fig.6B is a side view.

Fig.7A and Fig.7B illustrate a mounting configuration of the reflector. Fig.7A is a planar view. Fig.7B is a cross sectional view along A-A line in Fig.7A.

Fig.8A and Fig.8B illustrate an separate embodiment to keep the temperature of the reflector constant. Fig.8A is a planar view. Fig.8B is a side view.

Fig.9A and Fig.9B illustrate a photovoltaic devices inspected by the inspection apparatus of the present invention. Fig.9A is a planar view showing photovoltaic cells inside the photovoltaic devices. Fig.9B is a sectional view of Fig.9A.

Fig. 10 is a view schematically illustrating a configuration of the conventional inspection apparatus for photovoltaic devices.

### DETAILED DESCRIPTION OF THE INVENTION

Hereinafter, embodiments according to the present invention are described with reference to the accompanying drawings. In so doing, specific terminology is employed solely for the sake of clarity, and the present disclosure is not to be limited to the specific terminology so selected. It is to be understood that each specific element includes all technical equivalents that operate in a similar manner and achieve a similar result.

1. Inspection-Object (Photovoltaic devices panel)

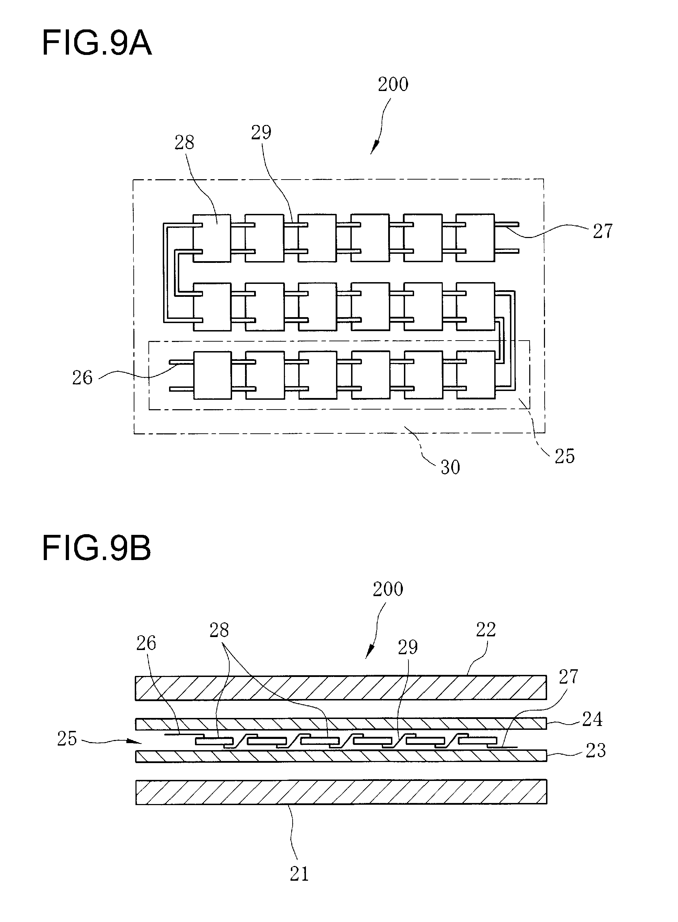

First, the description will be given of an example of an inspection-object 200 which is inspected by an inspection apparatus of an embodiment according to the present invention. Fig.9A and Fig.9B illustrate a photovoltaic devices inspected by the inspection apparatus of the present invention. Fig.9A is a planar view showing photovoltaic cells inside the photovoltaic devices. Fig.9B is a sectional view of Fig.9A.

As illustrated in the planar view of Fig.9A, the photovoltaic devices panel which is the inspection-object 200 is configured in such a manner that plural rectangular photovoltaic cells 28 are connected in series by lead wires 29 to form a string 25, and plural columns of strings 25 are connected by lead wires 29.

The photovoltaic devices as the inspection-object 200 may be formed with a single photovoltaic cell 28 only, or may be formed with the string 25 in which the plural photovoltaic cells 28 are straightly connected, or may be a photovoltaic devices panel 30 in which the plural columns of strings 25 are disposed in parallel and the photovoltaic cells 28 are disposed in matrix.

As illustrated in Fig.9B, the sectional structure of the inspection-object is formed by disposing the plural columns of strings 25 sandwiched by filling members 23 and 24 between a back side member 22 disposed on an upper side thereof and a transparent cover glass 21 disposed at a lower side thereof.

The back side member 22 is formed of, for example, polyethylene resin or the like. The filling members 23 and 24 are formed of, for example, EVA resin (polyethylene vinyl acetate resin) or the like. As described above, the string is formed by connecting the photovoltaic cells 28 with lead wires 29 between electrodes 26 and 27.

Such a photovoltaic devices panel is obtained by stacking the aforementioned constructional members and laminating. The laminating process is performed by pressing with force under heating in vacuum to cross-link the EVA resin with a laminator or the like.

Moreover, a kind of photovoltaic devices, which is generally called as a thin film-type, may be employed as the inspection-object 200.

For example, a typical structure of this kind of thin film-type photovoltaic devices is obtained in the following way of:

depositing a power generating element comprised of a transparent electrode, a semiconductor and a rear back electrode in advance via vacuum evaporation on the transparent cover glass disposed at the lower side; disposing the transparent cover glass at the lower side; covering the photovoltaic devices elements deposited on the glass with the filling members; covering the filling members with the back side member; and laminating the stacked members with a laminator.

Except that crystalline cells is replaced with deposition-typed power generating elements, the basic sealing structure of this kind of thin film-typed photovoltaic devices panel as the inspection-object 200 is the same as the case of the crystalline cells in the aforementioned description.

2. Entire configuration of the inspection apparatus

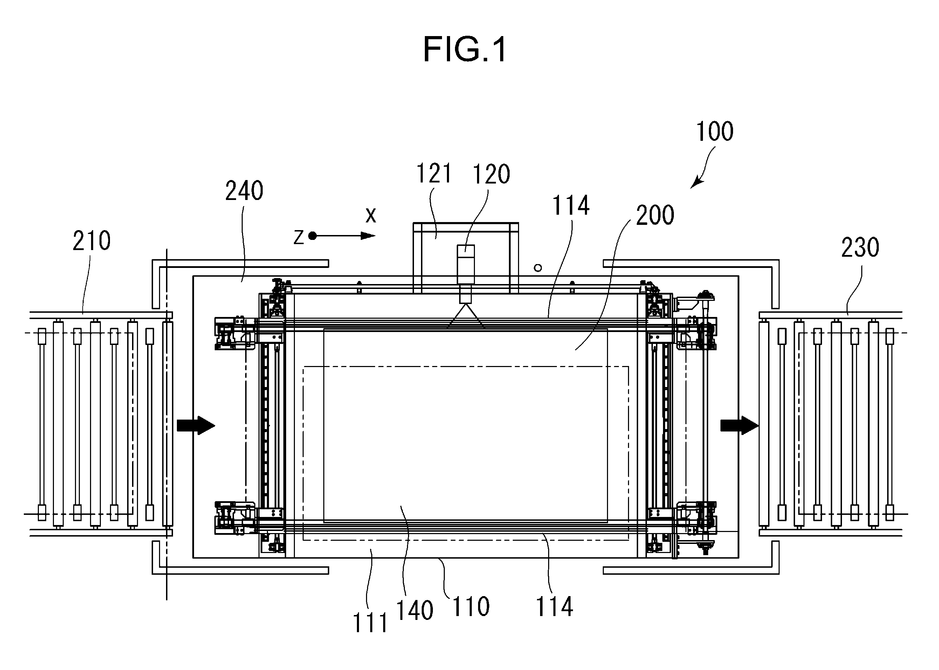

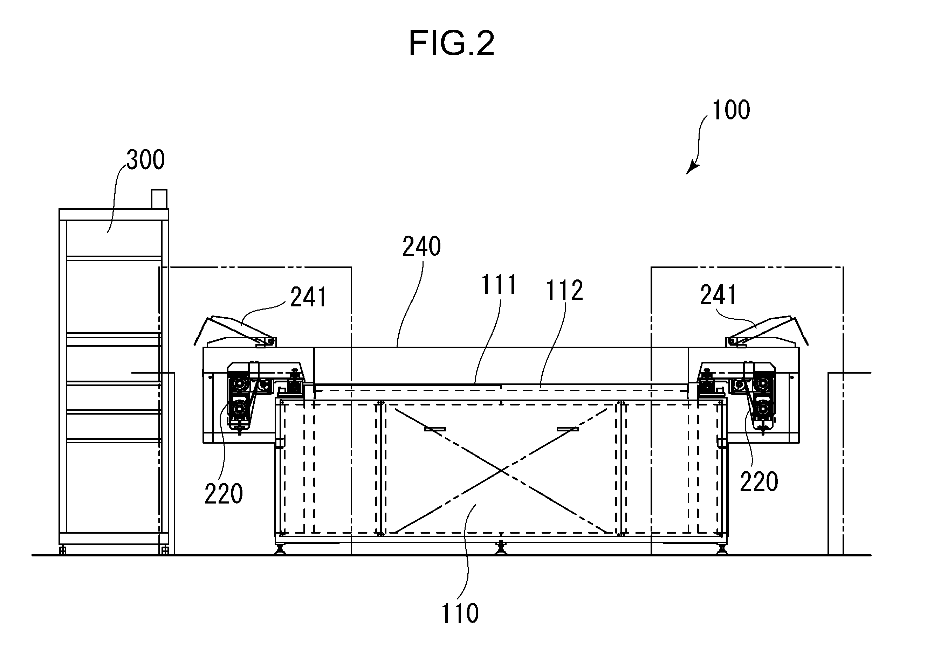

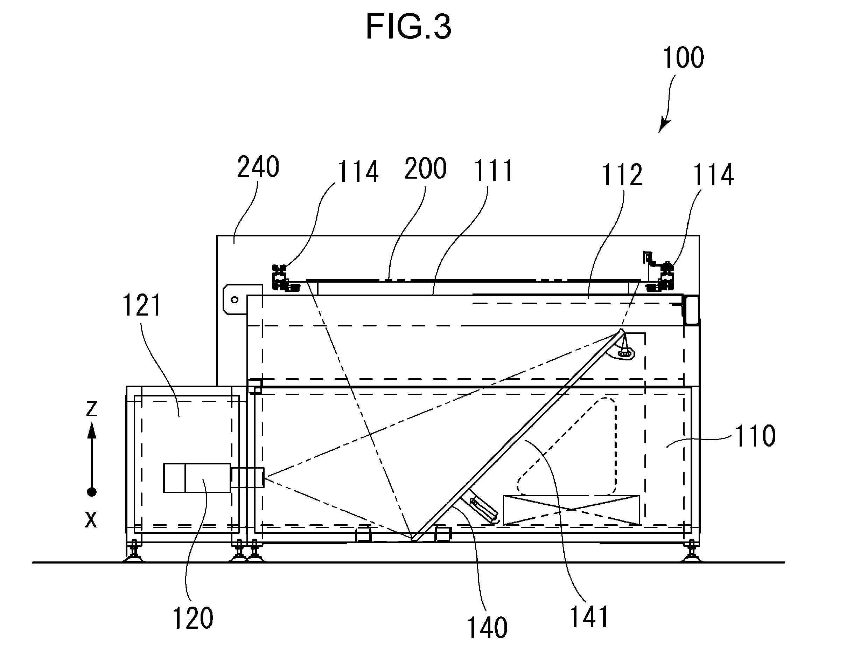

Fig. 1 is a planar view illustrating a structure of an inspection apparatus according to the present invention, Fig. 2 is a front view thereof, and Fig. 3 is a left-side view thereof. The inspection apparatus 100 for the photovoltaic devices according to the present invention, as illustrated in the drawings, has a cubic box-shaped darkroom 110. A transparent plate 112 is disposed at a flat upper surface 111 thereof. The transparent plate 112 is made of synthetic resin such as acryl resin or of glass. A camera 120 for inspecting the photovoltaic devices as the inspection-object 200 is disposed at a side in the darkroom.

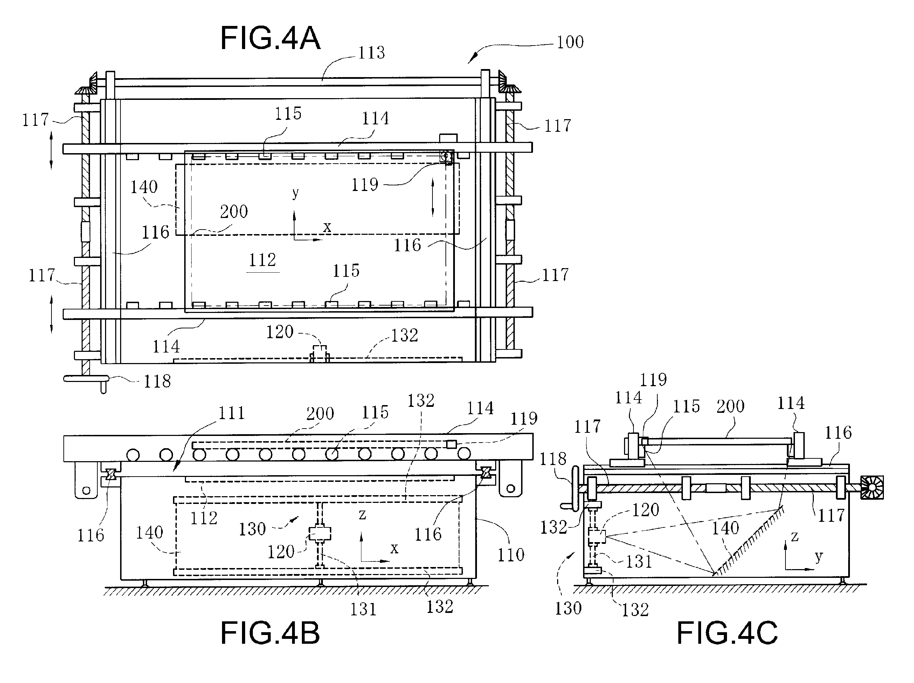

Fig.4A, Fig.4B and Fig.4C illustrate a separate configuration of an inspection apparatus according to the present invention. Fig.4A is a planar view thereof. Fig.4B is a front view thereof. Fig.4C is a right-side view thereof. The inspection apparatus 100 for the photovoltaic devices according to the present invention, as illustrated in the drawings, has a darkroom 110 and a transparent plate 112 disposed on an flat upper surface 111 of a cubic box-shaped darkroom 110. The transparent plate 112 is made of synthetic resin such as acryl resin or of glass. A camera 120 for inspecting the photovoltaic devices as the inspection-object 200 and a moving mechanism 130 for moving the camera are disposed at a side in the darkroom.

The darkroom 110 is formed of a shading material to prevent light rays from entering the darkroom 110, except the transparent plate 112 of the upper surface 111 thereof. Notwithstanding, it is also possible to make the entire upper surface 111 transparent if the photovoltaic devices as the inspection-object 200 is disposed on the upper surface 111 and then the entire upper surface 111 including the inspection-object 200 is covered with the shading means. Except the upper surface, the four side surfaces and the bottom surface including a camera mounting portion 121 are formed of shading material.

3. Transportation guiding and positioning of inspection-object

Transportation guide members 114 having a function of transporting and guiding the inspection objection 200 are provided on the upper surface 111. The distance in-between the transportation guide members 114 and 114 is configured so as to adjust in accordance with the size of the inspection-objection 200.

The configuration of the transportation guide members 114 will be described herein based on Fig.4A, Fig.4B and Fig.4C. The transportation guide member 114 is a narrow and long rail having a cross section of rectangular shape. A pair of the transportation guide members 114 is provided on an upper surface of the inspection apparatus 100, along a direction that the inspection-object 200 is transported. In an inner side surface of each transportation guide member 114, plural rollers 115 are disposed such that the inspection-object 200 is transported by the rollers 115. Therefore, while transporting and inspecting the inspection-object 200, the cover glass 21 at the lower side of the inspection-object is not in contact with the transparent plate 112 on the upper side of the inspection apparatus 100. Further, the transportation guide member 114 is configured to be adjustable in accordance with the size of width of the inspection-object 200 by moving rails 116 and feeding screws 117 which are respectively disposed at a transporting-in side and a carrying-out side for the inspection-object 200, and a handle 118. The feeding screw 117 is comprised of one right hand screw and the other left hand screws. Thus the transportation guide members 114 and 114 are configured to move closer to or farther away from each other with the center position therebetween being fixed by rotating the handle 118. Furthermore, the feeding screws 117 in the transporting-in side and the carrying-out side are connected to each other by a cross shaft 113 having bevel gears, and then both feeding screws are able to simultaneously rotate by the bevel gears by the rotation of the handle 118.

When the photovoltaic devices panel as the inspection-object is transported from the previous process of the inspection apparatus of the present invention, the photovoltaic devices panel is transferred to the transportation guide member 114 of the inspection apparatus by a transporting-in conveyor 210. The inspection-object 200 is transported by a conveyor device 220 of the transportation guide member. Therefore, while transporting and inspecting the inspection-object 200, the cover glass 21 at the lower side of the inspection-object is not in contact with the transparent plate 112 on the upper side of the inspection apparatus 100. After the inspection-object 200 is transported into the inspection apparatus, it is positioned to an inspection position through the process as follows.

The transportation guide member 114 is at a side surface provided with a positioning member 119 which is protruded and withdrawn by an actuator or the like, and the positioning of the inspection-object 200 transported in the direction of transportation is performed by protruding the positioning member 119. Other than the embodiment that the positioning member 119 protruded and withdrawn from the side surface of the transportation guide member 114 as disclosed above, the positioning member 119 can be configured to ascend and descend straightly from above of the guide member, or to ascend and descend by rotating.

If the positioning process is completed, then the conveyor device stops and inspection performance of the photovoltaic devices starts. The method of inspection performance is described hereinafter. The inspection performance is completed, the conveyor device 220 is operated to transfer the inspection-object 200 to the carrying-out conveyor 230, and then the inspection-object 200 is transported to the next process.

4. Photographing camera

The EL light emitted from the inspection-object 200 is a weak light ray of wavelength between 1,000 nm and 1,300 nm, is emitted in the darkroom 110 and the weak light ray is photographed by using the photographing camera 120. Therefore, it is necessary to use a CCD camera which has high sensitivity to weak light ray as the photographing camera 120.

5. Moving Mechanism for the Camera in the Darkroom

The moving mechanism 130 is comprised of a Z axis guide part 131 and a pair of X axis guide parts 132 and 132. The camera 120 is mounted to the Z axis guide part 131 to move up and down in the Z axis direction, and the Z axis guide part 131 is configured to freely move back and forth along the X axis by X axis guide part 132. Various types of linear actuators, motors and ball screws or the like can be employed as the Z axis guide part 131 and the X axis guide part 132.

6. A reflector within the Darkroom

A reflector 140 made of aluminum is disposed obliquely to the transparent plate 112 within the darkroom. The reflector 140 has a reflecting surface which is finished by polishing. The camera 120 mounted to the side surface of the darkroom can photograph the image of the inspection-object 200 which is disposed on the transparent plate 112, since the reflector is oblique with respect to the transparent plate 112. Although the oblique angle is approximately 45 degree in the present embodiment, it should be noted that it is not limited to the above mentioned angle.

In Figs. 1 to 3 of the embodiment of the present invention, the moving mechanism for the camera 120 is not provided. It is illustrated that the camera 120 is used in a fixed state. Further, it is possible to move the camera 120 to a arbitrary position in Z-X plane to thoroughly photograph the entire surface of the inspection-object 200, as shown in Fig.4A, Fig.4B and Fig.4C. In this case, it is desirable to extend the camera mounting portion 121 in Figs. 1 and 3 as long as the moving stroke of the camera in the X axis direction to make the camera movable.

It is configured to be possible to thoroughly photograph the entire surface of the inspection-object 200 by moving the camera 120 to a arbitrary position in the Z-X plane through the moving mechanism 130. In the embodiment, the moving mechanism 130 is configured to move the camera 120 in a plane right-angled to the transparent 112, but the plane is not limited to right-angle.

7. The other instruments

In addition to the aforementioned means, although not illustrated in the drawings, the inspection apparatus 100 of the present invention is provided with the power source 14 and the image processing apparatus 15 as illustrated in the conventional embodiment of FIG.10. These are stored in a controlling device 300. Furthermore, it is possible to photograph the entire photovoltaic devices panel in a single piece of photo or to photograph each of the photovoltaic cells 28, by using the personal computer and controlling the moving mechanism 130.

8. Usage of the inspection apparatus

A description is given of the usage of the inspection apparatus for the photovoltaic devices of the present invention in the embodiment in which the photovoltaic devices panel is employed as the inspection-object 200.

After the photovoltaic devices panel manufactured by a laminator or the like is carried out, it is transported in front of the inspection apparatus for the photovoltaic devices of the present invention by the transporting-in conveyor 210. The transported photovoltaic devices panel is guided between the pair of guide members 114 and 114, and transported to move onto the rollers 115 provided at the inner side of the guide members, and reaches above the darkroom 110. Thereafter, photovoltaic devices panel is positioned in the direction of transporting by protruding the positioning member 119 disposed at the inner side of the guide member 114 in a manner that the positioning member 119 is protruded and withdrawn by an actuator or the like.

After that, the inspection-object 200 is shaded by the shading cover, in order to prevent light rays from entering through the gaps between the transparent panel 112 and the inspection object 200. The shading cover is described hereinafter.

The photovoltaic devices panel as the inspection-object 200 reaches a predetermined position on the upper surface 111 of the darkroom 110, then stops on the transparent plate 112 of the darkroom 110 with the transparent glass plate disposed at the lower side and is connected with a power source not shown in drawings. Since the inspection-object 200 is smaller than the transparent plate 112, light rays enter the darkroom from the vicinity of the inspection-object 200. Therefore, a shading cover or the like which is described hereinafter is disposed to cover the entire upper surface of the darkroom 110 from above the inspection-object 200. Thereafter, a current is applied in a forward direction from the power source to the inspection-object 200. By this electrification, the inspection-object 200 emits EL light, which is photographed by the camera 120.

In the case that the inspection apparatus 100 of the present invention is employed to photograph the entire of the inspection-object 200 and inspect the photovoltaic devices by using the obtained image, it is possible to fix the camera 120 to a predetermined position of the darkroom 110, for instance, the position shown in Fig. 1 and 3 to photograph the inspection-object, without disposing or using the moving mechanism for the camera. In this case, the inspection-object 200 may be any one of the photovoltaic cell 28, the string 25 which is formed by connecting plural photovoltaic cells 28 with lead wires, and the photovoltaic devices panel 30 in which the plural columns of strings 25 are connected with lead wires and the photovoltaic cells 28 are disposed in matrix.

In the case that the inspection apparatus 100 of the present invention is employed to photograph the respective photovoltaic cells 28 disposed in matrix in the photovoltaic devices panel 30 one by one and perform the inspection by using the obtained images, the moving mechanism is needed to be disposed so as to move the camera 120 in the darkroom 110.

The controlling device 300 drives the moving mechanism 130 by use of the personal computer not shown in the drawings. The camera 120 photograph the photovoltaic cells 28 disposed in matrix in the photovoltaic devices panel 30 one by one, and the obtained image date is transmitted to the image processing apparatus comprised of the personal computer and the like. The image processing apparatus extracts those portions which emit no EL light from the images of the photovoltaic cells, and analyzes them to determine whether the respective photovoltaic cells 28 should be passed or not based on the obtained image data of respective photovoltaic cells. Whether the photovoltaic devices panel 30 as a whole should be passed or not is determined on the basis of the results determined whether passed or not for all photovoltaic cells.

Furthermore, respective photovoltaic cells or every few pieces of photovoltaic cells may be photographed by moving the camera and the photovoltaic devices panel 30 as a whole may be photographed by fixing the camera without moving.

The entire upper surface 111 of the darkroom 110 is covered by the shading cover. However, in the case of the photovoltaic devices panel 30, the back side member 22 made of resin is opaque and has sufficient shading effect. Moreover, the upper surface 111 of the darkroom 110 is comprised of members having shading effect, except the transparent plate 112. Therefore, it is sufficient to cover only the gap portion between the darkroom 110 and the inspection-object 200 with the shading cover. In the case that the inspection-object 200 is disposed in close contact with the transparent plate 112 and is larger than the transparent plate 112 and covers the entire transparent plate 112, the shading means is not necessary.

In the present embodiment, as illustrated in Figs. 1 to 3, the shading cover 240 is configured such that the upper surface 111 of the darkroom, the transportation guide member 114 and the inspection-object 200 are covered by a shading cover 240. Doors 241 capable of opening and closing are respectively disposed at the sides of the transporting-in conveyor 210 and the carrying-out conveyor 230. The door 241 may be configured to be opened and closed automatically by using an air cylinder and the like, or manually by operator. The doors are configured as follows. When the inspection-object is transported from the previous process and is right in front of the inspection apparatus of the present invention by moving on the transporting-in conveyor, the door at the inlet side is opened to allow the inspection-object to be transported into the inspection apparatus of the present invention. When the inspection-object is completely transported into the inspection apparatus, the door is closed. In addition, when the inspection is completed, the door at the outlet side is opened such that the inspection-object 200 is carried out. During inspection, the doors for transporting in and carrying out the inspection-object are held closed. Thus the light ray outside does not enter the space where the inspection-object is disposed.

9. Cleaning means and Bending prevention means for the Reflector

In addition, the problems hereunder are caused when the photovoltaic devices panel as the inspection-object is inspected by using the camera by disposing the reflector within the darkroom 110 as disclosed in the present invention.

The ambient temperature around the darkroom 110 is varied so long as the inspection apparatus of the present invention is not installed in a constant temperature chamber. Since the darkroom 110 is sealed, the temperature in the darkroom is increased by heat transfer if the plural inspection-objections which is heated by the completion of lamination is repeatedly photographed. The large reflector 140 is thermally expanded by the increased temperature. In such a state, the reflector is warped when it is fixed by the conventional bolts and the like, and then bending is occurred to the reflector by that kind of warp thereof. Since the reflector is directed upwardly, the reflector becomes dirty by dust attached thereto, whereby the reflecting surface of the reflector may become blurred. Furthermore, in the case that the humidity in the darkroom is changed, dew condensation may occur onto the reflecting surface of the reflector. These problems with respect to the reflector may cause deformation or dimness of the photographed image of the inspection-object 200, and may eventually bring about reduction of accuracy of defect-inspection for the photovoltaic devices panel.

The purpose of the present invention is to provide a concrete solution to solve those kinds of problems, and the embodiment is described in detail hereinafter.

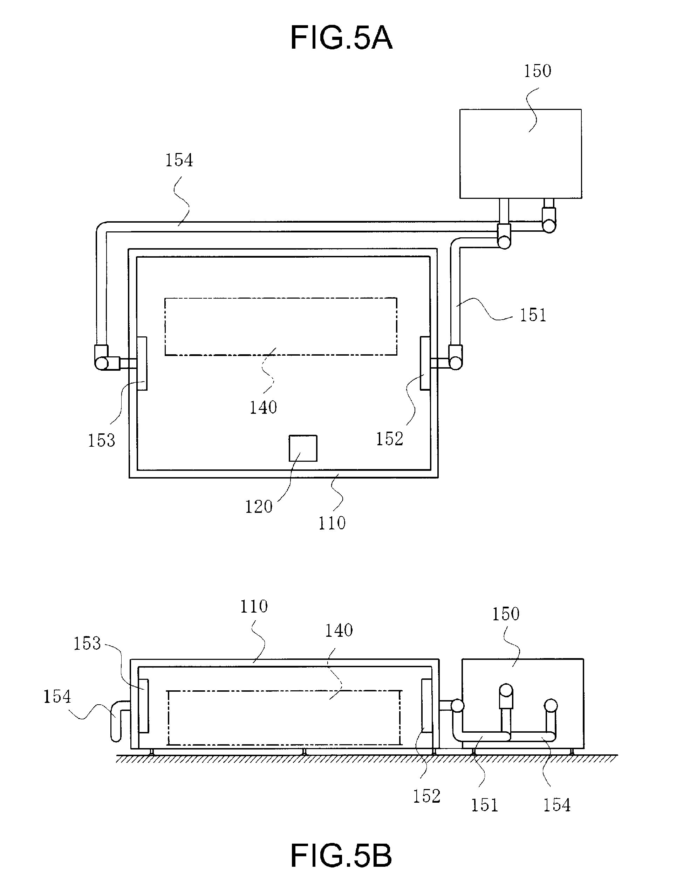

Fig.5A and Fig.5B illustrate a configuration to purify the air in the darkroom 110, and to keep the temperature in the darkroom 110 constant. Fig.5A is a planar view. Fig.5B is a front view. A temperature/humidity regulator 150 (an air processor) is disposed at an outside of the darkroom 110. The temperature/humidity regulator 150 is able to keep the temperature and humidity of air constant. The air in the temperature/humidity regulator 150 is supplied to the darkroom 110 through a discharge conduit 151 of the temperature/humidity regulator 150 which is connected to a side of the darkroom 110, by passing through a filter 152. The air cools an inside of the darkroom 110 to maintain the temperature and humidity therein, and then is introduced into a suction conduit 154 by passing through a filter 153 to return to the temperature/humidity regulator 150, thereby circulating. The air discharged from the temperature/humidity regulator 150 is supplied into the darkroom 110 after the dust therein is filtered through the filter 152. The air introduced into the darkroom 110 is returned to the temperature/humidity regulator 150 after the dust therein is filtered through the filter 153. By doing so, the air in the darkroom 110 becomes purified, thus it is prevented that the dust is attached to the reflector 140 or the camera 120.

In addition, in the case that it is not necessary to keep the temperature and humidity constant, the filters 152 and 153 may be disposed in the darkroom and the dust collector may be disposed at the place for the temperature/humidity regulator 150 instead.

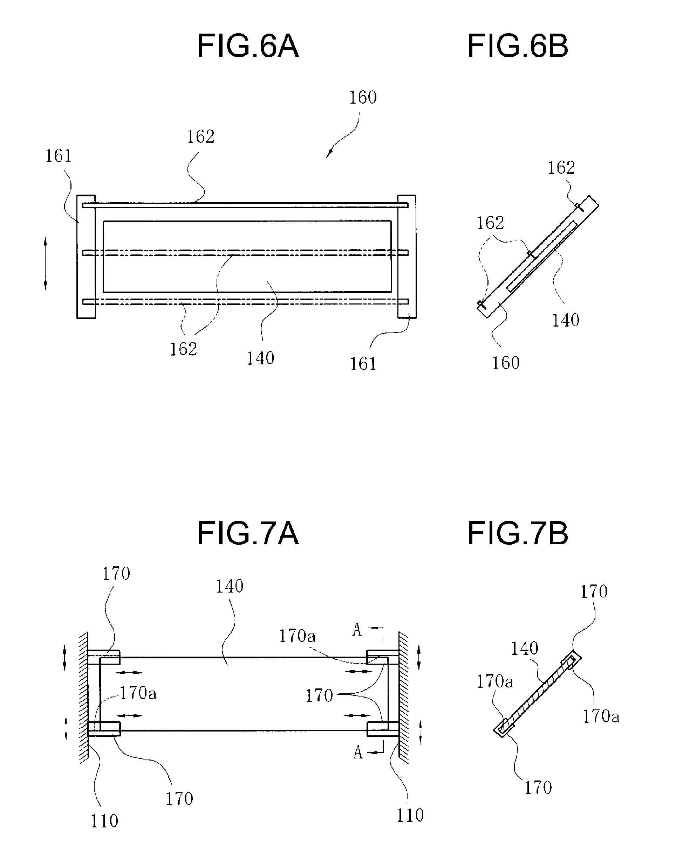

Fig.6A and Fig.6B illustrate a mounting configuration of an automatic cleaning device 160 for eliminating dust on the reflector 140. Fig.6A is a front view. Fig.6B is a side view. Support frames 161 are fixed to both sides of the reflector 140, and a scraper 162 is disposed between the support frames 161. The scraper 162 is configured to ascend and descend on the support frames 161 by an appropriate moving mechanism, for example, a linear actuator (not shown in drawings) which is disposed on the support frame, and to intermittently clean the upper surface of the reflector 140 by sweeping away the dust thereon. Although dew condensation may be brought about on the reflector 140 at the cold, it can be completely removed by the scraper 162. It is desirable to use the scraper that doesn't hurt the surface of the reflector 140 made of Aluminum. The scraper comprised of such as a resin plate or a fine-hair brush may be suggested for sweeping away the dust. The scraper having a sponge-like member at an end may be suggested for eliminating the dew condensation.

Fig.7A and Fig.7B illustrate a mounting configuration of the reflector 140. Fig.7A is a planar view. Fig.7B is a cross sectional view along A-A line in Fig.7A. The reflector 140 is supported by four supporting members 170 which are respectively fixed to walls of the darkroom 110. Since the reflector 140 is sized substantially as big as the inspection-object 200, it is thermally expanded even by a small change of temperature. When the four edges of the reflector are disposed in a fixed state, the bending is brought about to the reflector, and then the image reflected in the reflecting surface of the reflector is deformed. Therefore, the supporting members 170 are respectively formed with grooves 170a thereon, which are extended in a longitudinal direction of the reflector 140(side-to-side direction in Fig.7A). By this configuration, the grooves 170a can absorb the longitudinal extension or contraction of the reflector 140. The widthwise expansion or contraction of the reflector 140 can be absorbed by the supporting members 170 be slidably mounting to the darkroom 110. In other ways, it may be possible to deepen the grooves 170a of the supporting members 170 such that the grooves 170a can sufficiently absorb the widthwise expansion and contraction of the reflector 140.

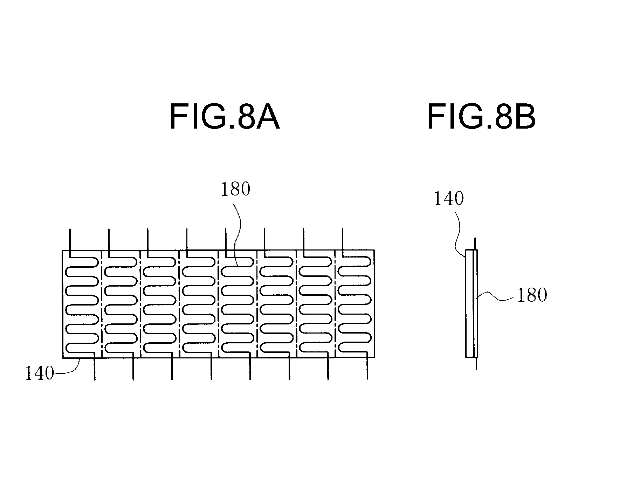

Fig.8A and Fig.8B illustrate an separate embodiment to keep the temperature of the reflector 140 constant. Fig.8A is a planar view. Fig.8B is a side view. The present embodiment is configured that the reflector 140 is on a rear surface provided with a meandering electrical heater 180 for temperature control, and then a predetermined amount of current is applied to the electrical heater 180 to generate heat. The temperature of the reflector 140 is kept constant by the heat generated from the electrical heater. Thus deformation or bending of the reflector caused by heat expansion and contraction is prevented. Furthermore, as shown in the drawings, the following configuration of the electrical heaters is desirable. The electrical heaters 180 are divided into plural segments along the length-direction of reflector 140. The plural meandering electrical heaters are respectively mounted on the segments and is separately controlled in temperature. Thus the entire reflector 140 can be more effectively maintained in the same temperature. As shown in the present embodiment, it is also possible to attach the electrical heaters 180 only to both end portions of the reflector 140, instead attaching them to the entire surface thereof.

In addition, in Fig.8A and Fig.8B, it is possible to use any heating and cooling member such as Peltier elements for the electrical heater for controlling the temperature of the reflector. In other ways, it is also possible to use a conduit structure in which water or gas flows, for controlling the temperature of the reflector.

According to the inspection apparatus 100 for photovoltaic devices according to the present invention, the photovoltaic devices as the inspection-object 200 is disposed outside of the darkroom. Thus, it is not necessary to provide a door to allow the inspection-object 200 to be transported in and carried out. Besides, the power source to apply the current to the photovoltaic devices as well as the electrical wirings is established outside the darkroom 110. Thus the structure of the darkroom 110 can be simplified. Especially, the inspection apparatus can be achieved to be compact, since the height of the darkroom 110 can become lowered by opaquely disposing the reflector 140 with respect to the inspection-object 200. In addition, any extra works, for example, such as digging out the ground for installing the inspection apparatus or the like, are not necessary at all, for unifying the pass lines of the manufacture line.

Furthermore, the inspection apparatus 100 for photovoltaic devices of the present invention is usably installed in the manufacture line for the photovoltaic devices panel and the like, and the photovoltaic devices panel is disposed on the upper surface of the darkroom 110 in such a manner that the light receiving surface of the photovoltaic devices is directed downwardly. Since the photovoltaic device is transported in the state where the light receiving surface thereof is directed downwardly in the conventional manufacturing process such as lamination of the photovoltaic devices panel, there is no need to converse the photovoltaic devices panel upside down when disposing the photovoltaic devices panel in the inspection apparatus 100, and it is possible to simplify the overall manufacturing process.

The reflector 140 can be prevented from being thermally deformed or warped, by operating the temperature/humidity regulator 150 to keep the temperature in the darkroom 110 constant, or by disposing the electrical heater 180 for temperature control to keep the temperature of the reflector 140 constant. By disposing the filters 152 and 153 or the automatic cleaning device 160, the reflecting surface of the reflector 140 can be prevented from being contaminated by dust, and thus can clearly project the inspection-object 200. Therefore, the degree of accuracy in defect-inspection for the photovoltaic devices panel can be maintained high.

As many apparently widely different embodiments of the present invention can be made without departing from the spirit and scope thereof, it is to be understood that the invention is not limited to the specific embodiments thereof except as defined in the appended claims.

## Claims

1. An inspection apparatus for photovoltaic devices, **characterized by** having:
a darkroom having a flat upper surface;
a transparent plate provided on the upper surface of the darkroom to dispose photovoltaic devices as an inspection-object thereon;
a reflector disposed in the darkroom at an oblique angle to the transparent plate; and
a camera photographing an image reflected through the reflector.

2. The inspection apparatus according to claim 1, further **characterized by** having a moving mechanism for moving the camera in the darkroom in a plane which intersects the transparent plate.

3. The inspection apparatus according to claim 1 or 2, further **characterized by** having a transportation guide member for the photovoltaic devices as the inspection-object,
the transportation guide member disposed on an upper position of the darkroom.

4. The inspection apparatus according to any one of claims 1 to 3, further **characterized by** having a shading member for covering the photovoltaic devices as the inspection-object and the transportation guide member.

5. The inspection apparatus according to any one of claims 1 to 4, **characterized in that** the shading member is provided with doors for respectively transporting the photovoltaic devices as the inspection-object into the inspection apparatus and carrying out from the inspection apparatus.

6. The inspection apparatus according to claim 1 or 2, further **characterized by** having a temperature/humidity regulator configured for maintaining the temperature and humidity in the darkroom substantially constant.

7. The inspection apparatus according to any one of claims 1, 2, and 6, further **characterized by** having supporting members for supporting the reflector,
**characterized in that** the supporting members are configured to be able to absorb the expansion and contraction of the reflector caused by the expansion of the reflector.

8. The inspection apparatus according to any one of claims 1, 2, 6, and 7, further **characterized by** having an automatic cleaning device which cleans a reflecting surface of the reflector.

9. The inspection apparatus according to any one of claims 1, 2, 6, 7, and 8, further **characterized by** having a temperature controlling device provided on a rear surface of the reflector, to maintain the temperature of the reflector substantially constant.

10. The inspection apparatus according to any one of claims 1, 2, 6, 7, 8, and 9, further **characterized by** having a conduit provided on a rear surface of the reflector, to maintain the temperature of the reflector substantially constant,
**characterized in that** fluid for heat exchange flows in the conduit.
